# EUROPEAN PATENT APPLICATION

(11) **EP 2 128 739 A1**
(43) Date of publication of application: **02.12.2009**
(21) Application number: 08157166.3
(22) Date of filing: 29.05.2008
(51) Int. Cl.: G06F 1/26, G06F 3/03

(54) **Optical movement detection device**

(71) Applicant: EM Microelectronic-Marin SA, 2074 Marin (CH)
(72) Inventor: Degrauwe, Marc, 2025, Chez-le-Bart (CH)
(74) Representative: Couillard, Yann Luc Raymond

(57) **Abstract**

The invention relates to an optical movement detection device including a light source (10) for irradiating a surface (12), a power supply (14) and an optical sensor (16) for sensing light reflected from the surface (12). In order to avoid unused optical energy, it is proposed that the optical movement detection device further comprises at least one solar-cell photodiode (30a - 30d), wherein the solar-cell photodiode (30a - 30d) is arranged so as to recycle optical energy generated by the light source (10).

## Description

The invention relates to an optical movement detection device including a light source for irradiating a surface, a power supply and an optical sensor for sensing light reflected from the surface.

In optical movement detection devices such as optical mice, the largest expenditure of energy is the illumination source, which is usually formed as an LED or a laser-diode. The light source or illumination source lights up the working surface so that an optical image can be collected by the optical sensor. The amount of light reflected from the working surface and the direction of the reflected light are strongly dependent on the properties of the working surface. The customer desires optical mice which may be used on a large variety of surface types. As a consequence, it is impossible to always precisely focus the reflected light onto the optical sensor because the surface properties are not known. In addition, stray light results from manufacturing tolerances and from general characteristics of optical propagation. According to the prior art, the excess optical power contained in the stray light is unused and absorbed using light-blocking layers and special circuits.

Moreover, various cordless or wireless versions of optical mice are known. The power supply of such wireless optical mice is typically ensured by one or more battery cells or accumulator cells which can be of non-rechargeable or rechargeable type. One major limitation of these battery cells is the relatively short lifetime.

In order to increase the battery lifetime, various attempts for reducing the energy consumption of the light source have been made. In particular, it was proposed to minimize the optical power dynamically depending on the working surface, to minimize the time the light is activated and to minimize the area of the sensor that needs illumination. For example the document US 2005/0200606 A1 teaches to apply various energy saving strategies upon detecting a low battery status.

It is one of the objects of the invention to provide additional means for reducing the energy consumption in an optical movement detection device and to provide a semiconductor chip suitable for this purpose.

This object is achieved in particular by an optical movement detection device according to claim 1 and by a semiconductor chip according to claim 12.

The invention starts in particular from an optical movement detection device for detecting surface movements including a light source for irradiating a surface, a power supply and an optical sensor for sensing light reflected from this surface.

According to one aspect of the invention, it is proposed that the optical movement detection device further comprises at least one solar-cell photodiode, wherein the solar-cell photodiode is arranged so as to recycle optical energy generated by the light source. Due to the partial recycling of the optical energy, the total energy consumption of the optical movement detection device can be reduced and the power supply can be supported by the solar-cell photodiode. The stray light and the excess optical energy from the light source may be effectively used. If the power supply comprises a battery, the life time of this battery may be increased.

The invention may be applied to any type of optical movement detection device for detecting a relative movement of a surface. Optical movement detection devices in this sense include in particular optical mice and track balls.

The solar-cell photodiode could be adapted to the spectrum of the light source. In contrast to solar-cells for generating electrical energy from ambient light and/or sun light, the solar-cell photodiode to be used in the device according to the invention needs not necessarily to be sensitive to the entire visible spectrum.

In preferable embodiments of the invention, the solar-cell photodiode is arranged in the vicinity of the optical sensor, in particular in a surrounding region of a pixel array of the optical sensor. The light sensitive sides of the solar-cell photodiode of the optical sensor may be oriented in the same direction, in particular towards the surface illuminated by the light source.

According to a further aspect of the invention, it is proposed that the solar-cell photodiode and the optical sensor are integrated in a single semiconductor chip, in particular in a Complementary Metal Oxide Semiconductor (CMOS) chip. Further functionalities may be included in the chip, if the optical sensor is formed as an Active Pixel Sensor (APS) including at least one signal pre-processing unit, e.g. an amplifying circuit.

The collaboration of the solar-cell photodiode and the power supply can be simplified, if the optical mouse further includes a pump circuit for pumping the current generated by the solar cell photodiode into the power supply.

The invention is in particular suitable for wireless mice comprising means for wireless communication with an associated computer system.

The solar-cell photodiodes may be cheaper and simpler to produce than the transistors of the pixel array, if the surface of the solar-cell photodiode is at least two times or ten times larger than a surface of the transistors constituting a pixel array of the optical sensor. Typically, the surface of the solar-cell photodiode is hundreds or thousands of times larger than the surface of the transistors. It is noted that in principle, the transistors of the pixel array could also be used as solar-cell photodiodes, e.g. by recycling excessive charges generated in oversaturated pixels of the optical sensor.

Further characterizing features of the invention and the advantages thereof will become apparent from the following description of the drawings. The description and the drawings relate to one possible embodiment of the invention and the skilled person will easily find other combinations or subcombinations of the characterizing features of the invention being adapted to specific needs.

Fig. 1 shows an optical movement detection device including a light source, an optical sensor and a solar-cell photodiode in a schematic representation.

Fig. 2 shows a CMOS chip including the optical sensor and the solar-cell photodiode of the optical movement detection device of Figure 1.

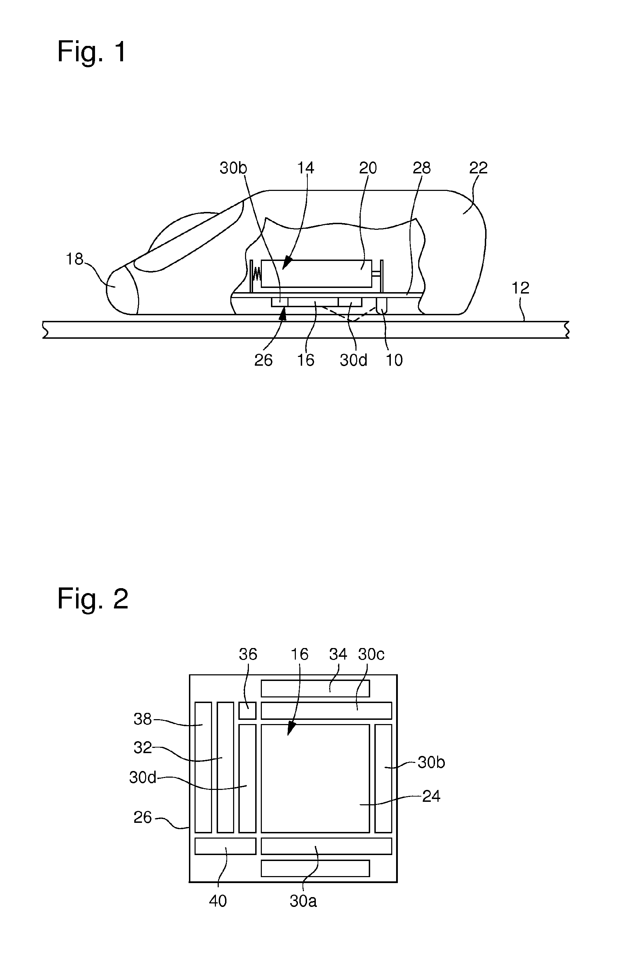

Fig. 1 is a schematic representation of an optical movement detection device including a light source 10 for irradiating a surface 12 over which the device is moved and the relative movement of which shall be detected. The optical movement detection device further includes a power supply 14 and an optical sensor 16 in the form of a photodetector array for sensing light reflected from the surface 12. The arrangement of the optical sensor 16 and the light source 10 is provided to detect a movement of the surface 12 relative to the optical movement detection device.

In the embodiment of Fig. 1, the optical movement detection device is a wireless optical mouse having a wireless communication interface 18 using e.g. infrared or radio signals for communicating with a computer (not shown) associated to the optical mouse. The computer has a corresponding interface for receiving the signals from the optical mouse.

The power supply 14 of the optical movement detection device includes two battery cells 20 of type AA/LR3 which are arranged in a housing 22 of the mouse. Under operating conditions, the bottom side of the housing 22 of the optical movement detection device contacts the horizontally oriented surface 12 over which the optical mouse is moved. In order to facilitate the sliding of the mouse on the surface, the bottom side of the housing 22 may be provided with a coating or with antiseize elements (not shown).

The surface 12 may be a surface of a mouse pad or any other suitable surface with an optically detectable structure. The optical sensor 16 includes multiple photoelectric transistors arranged in a pixel array 24 (Fig. 2) and is part of a Complementary Metal Oxide Semiconductor (CMOS) chip 26.

The light source 10 is a Light Emitting Diode (LED) of standard type and is mounted together with the CMOS chip 26 and further circuitry including circuitry for the power supply 14 on a common circuit board 28. Other embodiments of the invention might use a laser diode as a light source 10. Under operating conditions, the light source 10 irradiates light onto the surface 12. The light is partially reflected from the surface 12 and the reflected light is collected by a lens to produce an image of the illuminated surface 12 in a pixel array 24 of the optical sensor 16.

The signal processing logic of the optical mouse or of the computer receiving the signals from the optical mouse detects translational displacements of the image on the pixel array 24 and determines the quantities characterizing a movement of the optical mouse from the detected displacement. The quantities characterizing the movement may include e.g. the extent of the movement and the velocity thereof.

Moreover, the optical movement detection device includes four solar-cell photodiodes 30a - 30d. The solar-cell photodiodes 30a - 30d are arranged so as to recycle optical energy contained in stray light generated by the light source 10. The LED forming the light source 10 and the solar-cell photodiodes 30a - 30d are adapted to each other in the sense that the efficiency factor of the solar-cell photodiodes 30a - 30d is large in the bandwidth of the LED and/or has a maximum near a centre of the bandwidth of the LED.

In the embodiment of Fig. 1, the solar-cell photodiodes 30a - 30d are arranged in the vicinity of the optical sensor 16 in a surrounding region of a pixel array 24 of the optical sensor 16 such that stray light generated by the light source 10 is effectively trapped.

The light sensitive sides of the solar-cell photodiodes 30a - 30d and of the optical sensor 16 are oriented in the same direction respectively such that the light sensitive sides face the surface 12 the relative movement of which shall be detected.

Fig. 2 shows a Complementary Metal Oxide Semiconductor (CMOS) chip 26 including both the solar-cell photodiodes 30a - 30d and the optical sensor 16. The optical sensor 16 is formed as an Active Pixel Sensor (APS) including at least one signal processing circuit.

The pixel matrix of the optical sensor 16 is of quadratic shape and is arranged in the centre of the semiconductor chip 26. On each of its four sides, the optical sensor 16 is surrounded by one of the four solar-cell photodiodes 30a - 30d, which are arranged between the pixel array 24 and further circuitry components of the semiconductor chip 26. The further circuitry components include readout and amplification units 32, 34 for the rows and columns of the optical sensor 16, an analogue-digital converter 36 for converting the signal accumulated on the individual pixels and a signal processing circuit 38 for determining the displacement of the image on the optical sensor 16.

The CMOS chip 26 further comprises a pump circuit 40 for pumping the current generated by the solar-cell photodiodes 30a - 30d into the power supply 14. The pump circuitry 40 transforms the voltage generated by the solar-cell photodiodes 30a - 30d to the voltage level of the battery.

The semiconductor material of the solar-cell photodiodes 30a - 30d may be similar or even the same as the semiconductor material of the CMOS transistors of the pixel array 24. However, the solar-cell photodiodes 30a - 30d are driven as solar cells and the charges accumulated therein are collected and not read out. According to a preferred embodiment of the invention, the solar-cell photodiodes 30a - 30d are produced by executing a subset of the process steps needed to make the CMOS transistors of the pixel array 24. There are therefore no additional process steps necessary to form the solar-cell photodiodes in the substrate, and the photodiodes can be formed in the substrate at the same time as the transistors for the pixel array. Depending on the budget and on the power savings desired, the surface 12 of the solar-cell photodiodes 30a - 30d can be multiple times larger than a surface 12 of transistors constituting a pixel array 24 of the optical sensor 16. In the embodiment of Fig. 2, the four solar-cell photodiodes 30a - 30d arranged on the four sides of the pixel array 24 may be formed as single diodes having only one pair of electrodes.

In preferred embodiments of the invention, the provision of the solar-cell photodiodes 30a - 30d may supplement further strategies for reducing the energy consumption such as an adaptive control of the intensity of light emitted from the light source 10, a better focussing of the light on a smaller pixel array 24 and a minimization of the time in which the light source 10 is active. Moreover, the effectiveness of the energy recycling may be enhanced by providing reflectors and/or by providing housing parts with good reflection properties in the bandwidth of the light from the light source 10. If the interface 18 to the computer employs infrared light, further infrared-sensitive photodiodes might be provided to avoid energy losses due to stray light a the infrared interface 18.

Moreover, the solar-cell photodiodes 30a - 30d capturing the stray light from the light source 10 may be supplemented by further solar-cell photodiodes for capturing ambient light. Both types of solar-cell photodiodes may use the same pumping circuit 40.

## Claims

1. Optical movement detection device including a light source (10) for irradiating a surface (12), a power supply (14) and an optical sensor (16) for sensing light reflected from the surface (12), **characterized in that** it further comprises at least one solar-cell photodiode (30a - 30d), wherein the solar-cell photodiode (30a - 30d) is arranged so as to recycle optical energy generated by the light source (10).

2. Optical movement detection device according to claim 1, wherein the solar-cell photodiode (30a - 30d) is arranged in the vicinity of the optical sensor (16).

3. Optical movement detection device according to claim 2, wherein the solar-cell photodiode (30a - 30d) is arranged in a surrounding region of a pixel array (24) of the optical sensor (16).

4. Optical movement detection device according to one of the preceding claims, wherein the light sensitive sides of the solar-cell photodiode (30a - 30d) and of the optical sensor (16) are oriented in the same direction respectively.

5. Optical movement detection device according to one of the preceding claims, wherein the solar-cell photodiode (30a - 30d) and the optical sensor (16) are integrated in a single semiconductor chip (26).

6. Optical movement detection device according to claim 5, wherein the semiconductor chip (26) is a Complementary Metal Oxide Semiconductor chip (26).

7. Optical movement detection device according to one of the preceding claims, wherein the optical sensor (16) is formed as an Active Pixel Sensor including at least one signal processing circuit (38).

8. Optical movement detection device according to one of the preceding claims, **characterized by** further including a pump circuitry (40) for pumping the current generated by the solar-cell photodiode (30a - 30d) into the power supply (14).

9. Optical movement detection device according to one of the preceding claims, wherein the power supply (14) includes at least one battery cell (20).

10. Optical movement detection device according to one of the preceding claims, further comprising means for wireless communication with an associated computer system.

11. Optical movement detection device according to one of the preceding claims, wherein the solar-cell photodiode (30a - 30d) is made of the same semiconductor material as transistors constituting a pixel array (24) of the optical sensor (16).

12. Optical movement detection device according to one of the preceding claims, wherein oversaturated pixels of a pixel array (24) of the optical sensor (16) at least partly constitute the solar-cell photodiode (30a - 30d).

13. Semiconductor chip (26) comprising an optical sensor (16) and at least one solar-cell photodiode (30a - 30d) for use in an optical movement detection device according to one of the preceding claims.
